(19) Europäisches Patentamt
European Patent Office
Office européen des brevets

(11) Veröffentlichungsnummer: **0 164 547**
**B1**

(12) # EUROPÄISCHE PATENTSCHRIFT

(45) Veröffentlichungstag der Patentschrift: **03.06.87**

(21) Anmeldenummer: **85105198.7**

(22) Anmeldetag: **29.04.85**

(51) Int. Cl.⁴: **C 09 D 3/72,** C 08 J 7/04, C 08 G 18/72, C 08 G 18/08, C 08 L 75/06 // (C08L75/06, 83:04, 71:02)

(54) **Polyurethan-Dispersionen und ihre Verwendung als Finish-Mittel.**

(30) Priorität: **10.05.84 DE 3417265**

(43) Veröffentlichungstag der Anmeldung: **18.12.85 Patentblatt 85/51**

(45) Bekanntmachung des Hinweises auf die Patenterteilung: **03.06.87 Patentblatt 87/23**

(84) Benannte Vertragsstaaten: **AT BE CH DE FR GB IT LI NL**

(56) Entgegenhaltungen:
**EP - A - 0 024 296**
**EP - A - 0 073 392**
**FR - A - 2 386 592**
**GB - A - 2 104 085**

(73) Patentinhaber: **BAYER AG, Konzernverwaltung RP Patentabteilung, D-5090 Leverkusen 1 Bayerwerk (DE)**

(72) Erfinder: **Noll, Klaus, Dr., Morgengraben 6, D-5000 Köln 80 (DE)**
Erfinder: **Thoma, Wilhelm, Dr., Birkenweg 25, D-5090 Leverkusen 3 (DE)**
Erfinder: **Nachtkamp, Klaus, Dr., Leuchterstrasse 112, D-5000 Köln 80 (DE)**
Erfinder: **Schröer, Walter, Dr., Nicolai-Hartmann-Strasse 29, D-5090 Leverkusen (DE)**
Erfinder: **Pedain, Josef, Dr., Haferkamp 6, D-5000 Köln 80 (DE)**

**EP 0 164 547 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Finish-Mittel auf Basis wässeriger Polyurethan-Dispersionen sowie die Verwendung dieser Mittel zur Herstellung von Schlussstrichen oder Finishen auf flexiblen Substraten, vorzugsweise auf PVC, wobei diese eine ausgezeichnete Haftung und/oder Alkoholbeständigkeit aufweisen.

Die erfindungsgemässen Überzugsmittel bestehen aus einer wässerigen Polyurethan-Dispersion mit bestimmten chemisch-physikalischen Eigenschaften und sind durch einen hohen Urethangruppengehalt und durch stark verzweigende Kettenverlängerung mit (cyclo) aliphatischen Polyaminen mit einer Funktionalität von mehr als 2 charakterisiert.

Die Herstellung von Polyurethan-Beschichtungen auf PVC ist im Prinzip bekannt. So werden beispielsweise in den US-Patentschriften 3 262 805, 4 017 493 und 4 045 600 Verfahren zur Beschichtung von PVC unter Verwendung von in organischen Lösemitteln gelösten Einkomponenten- bzw. Zweikomponenten-Polyurethansystemen beschrieben. Die Verwendung von lösemittelhaltigen Überzugsmitteln ist jedoch in der Praxis mit Nachteilen verbunden; aus ökonomischen und ökologischen Gründen ist es erforderlich, die Verwendung von organischen Lösemitteln so weit wie möglich einzuschränken oder ganz zu vermeiden.

Aus der DE-OS 1 769 387 (GB-PS 1 191 260) ist es bekannt, PVC mit wässerigen Polyurethan-Dispersionen zu verkleben. Als Deckstrich oder Finish auf PVC konnten sich die wässerigen Polyurethan-Dispersionen jedoch nicht durchsetzen, da es bis dahin nicht möglich war, Produkte zur Verfügung zu stellen, welche einerseits gute Haftung auf PVC (sowohl im trockenen wie auch im nassen Zustand) besitzen und andererseits das in der Beschichtungsindustrie für Deckstriche bzw. Finishe geforderte hohe Qualitätsniveau (hoher Erweichungspunkt; grosse mechanische Festigkeit; Stabilität gegen Hydrolysealterung; geringe Quellung in Weichmachern; Sperrwirkung gegen die Migration der im PVC enthaltenen Weichmacher; Vermeidung von Verfärbungen bei den Geliertemperaturen der PVC-Plastisole; angenehmer, trockener Griff) aufweisen.

Mit den in DE-OS 3 134 161 vorgestellten Polyurethanharnstoffdispersionen gelang es, erstmalig Beschichtungsmittel für PVC zur Verfügung zu stellen, die diese Anforderungen weitgehend erfüllten. Sie sind insbesondere für die Verwendung im sogenannten Umkehrverfahren geeignet, bei dem der PUR-Deckstrich als erster auf einem Trennmaterial erzeugt wird und erst dann durch Auftrag eines geschäumten oder ungeschäumten PVC-Plastisols oder einer ähnlichen PVC-Beschichtungsmasse die Hauptmenge der Beschichtung aufgebracht wird, in die auch das Substrat leicht eingedrückt wird. Nach dem Aushärten (z.B. durch Gelieren des PVC-Plastisols) ist der fertig beschichtete Artikel vom Trennmaterial abzuziehen und stellt eine mit einem PUR-Deckstrich versehene PVC-Beschichtung dar.

Für ein weiteres wirtschaftlich bedeutendes Einsatzgebiet für Polyurethanharnstoffe, nämlich das nachträgliche Finishen eines bereits mit PVC-Beschichtung versehenen Substrats, sind diese PUR-Dispersionen allerdings nur wenig geeignet.

Insbesondere das Aufbringen von dekorativen oder Effekt-Finishen kann jedoch nur durch nachträgliche Finishen erfolgen und hier werden hohe Anforderungen gestellt, wie z.B. hohe Beständigkeit gegen Wasser/Alkoholgemische und gute Reibechtheit auch im nassen Zustand. Bei nachträglichem Auftrag der PUR-Dispersionen nach DE-OS 3 134 161 können diese Anforderungen aber nicht erfüllt werden.

Es wurde nun gefunden, dass man aus wässerigen Polyurethandispersionen, deren Festkörper besonders dadurch charakterisiert ist, dass er einen ausserordentlich hohen Gehalt an Urethangruppen, insbesondere durch Einbau hoher Mengen an niedermolekularen Polyolen, aufweist, Finish-Mittel für PVC enthält, welche die genannten Anforderungen erfüllen und sich besonders durch hervorragende Haftung auf PVC-Flächengebilden in trockenem und nassem Zustand auszeichnen und darüber hinaus hohe Beständigkeit gegen Ethylalkohol, insbesondere wässerigen Ethylalkohol, aufweisen.

Gegenstand der Erfindung sind wässerige Beschichtungs- und Finishmittel insbesondere für PVC und PUR-Flächengebilde auf der Basis wässeriger, emulgatorfreier, sedimentationsstabiler Polyurethan-Dispersionen mit einem Feststoffgehalt von 10-70 Gew.-%, welche dadurch gekennzeichnet sind, dass der Polyurethanfeststoff aus

A. 35-55 Gew.-% eines Polyesterdiols mit einem Molekulargewicht von 500-5000, vorzugsweise 1000-3000,

B. 6-15 Gew.-% niedermolekularen Diolen und gegebenenfalls Triolen mit 2-10 Kohlenstoffatomen, wobei der Triolanteil $\leq 8$ Gew.-% beträgt,

C. 1,5-15 Gew.-% anionische Gruppen tragenden und/oder nicht ionische Polyoxyethylensegmente aufweisenden, ein- oder mehrwertigen Verbindungen,

D. 25-45 Gew.-% eines Diisocyanats der allgemeinen Formel

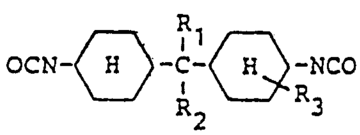

in der $R_1$, $R_2$ und $R_3$ gleich oder verschieden sind und Wasserstoff oder einen gradkettigen oder verzweigten aliphatischen Kohlenwasserstoffrest mit 1-4 C-Atomen bedeutet, vorzugsweise 4,4'-Diisocyanatodicyclohexylmethan,

E. 2-9 Gew.-% eines aliphatischen oder anderen cycloaliphatischen Diisocyanats als D und

F. 0,2-4,0 Gew.-% eines Polyamins mit einer Funktionalität $> 2$, bevorzugt 2,5-3,5, besteht und die wässerigen Zubereitungen alkoxylierte Dimethyl-polysiloxane und wasserlösliche Polyethylenoxide enthalten.

Weiterer Erfindungsgegenstand sind Wässerige Beschichtungs- und Finish-Mittel für vorzugsweise PVC und PUR-Flächengebilde, wobei die wässerige Zubereitung 15-65% Feststoff enthält, der aus den folgenden Komponenten besteht:

I) 65-99,8 Gew.-% Polyurethanharnstoff nach 1) A-F),

II) 0,1-5 Gew.-% alkoxyliertes Dimethylpolysiloxan,

III) 0,1-10 Gew.-% wasserlösliche, mehrfach Ethylenoxid-Einheiten, ggf. Hydroxy- und/oder Carboxylgruppen enthaltende Mittel,

wobei die Summe I + II + III ≧ 80% beträgt.

Besonders bevorzugt sind wässerige Beschichtungs- und Finish-Mittel deren wässerige Zubereitung 20-45% Feststoff enthält, der aus den Komponenten I, II, III in folgenden Verhältnissen zusammengesetzt ist.

I) 73-99 Gew.-% Polyurethanharnstoff

II) 0,5-2 Gew.-% alkoxyliertes Dimethylpolysiloxan

III) 0,5-5 Gew.-% wasserlöslich, mehrfach Ethylenoxid-Einheiten, ggf. Hydroxyl und/oder Carboxylgruppen enthaltende Mittel,

wobei die Summe I + II + III ≧ 80% beträgt.

Vorzugsweise ist das alkoxylierte Dimethylpolysiloxan nach II) ethoxyliert und/oder propoxyliert und sind die nichtionischen, wasserlöslichen Mittel nach III alkoxylierte Alkylphenole oder hochmolekulare Polyethylenoxide oder Polyethylenoxid-Derivate.

Ein weiterer Gegenstand der Erfindung sind Verfahren zum Aufbringen von Schlussstrichen und Finishen insbesondere auf PVC- und PUR-Flächengebilden nach bekannten Techniken, wobei hierfür die erfindungsgemässen wässerigen Beschichtungs- und Finish-Mittel verwendet werden und die Trocknung bei 70-170° C erfolgt.

Überraschend ist, dass gegenüber der Lehre aus DE-OS 3134161/EP 0073392 die erfindungsgemässen PUR-Dispersionen, auf PVC-Flächengebilden als Finish aufgebracht, hervorragend im trockenen und nassen Zustand haften und sich gegen Ethylalkohol, besonders wässerigen Ethylalkohol, durch gute Abriebfestigkeit auszeichnen. Überraschend ist ferner, dass trotz des Zusatzes der hydrophilen Verlaufmittel, nämlich der alkoxylierten Dimethyl-polysiloxane und wasserlöslichen Polyethylenoxid-Einheiten enthaltenden Mittel, die für die Dispersionen bemerkenswerte Haftung bereits auch im nassen Zustand erzielt wird.

Die Dispersionen weisen im allgemeinen einen Feststoffgehalt von 10-70 Gew.-%, vorzugsweise 15-65 Gew.-%, auf und können nach verschiedenen, an sich bekannten Verfahren hergestellt werden.

Verfahren für die Herstellung erfindungsgemäss geeigneter stabiler, wässeriger Polyurethan-Dispersionen werden beispielsweise in den deutschen Auslegeschriften 1 178 586 (US-Patent 3 480 592), 1 495 745 (US-Patent 3 479 310) und 1 770 068 (US-Patent 3 756 992), den deutschen Offenlegungsschriften 2 314 512 (US-Patent 3 905 929), 2 314 513 (US-Patent 3 920 598), 2 320 719 (Britische Patentschrift 1 465 572), 2 446 440, 2 555 534 und 2 811 148 sowie von D. Dieterich in „Angewandte Chemie" *82*, 53 (1970), beschrieben. Das allgemeine Prinzip dieser Verfahren besteht darin, in die Kette eines Polyurethan- bzw. Polyurethan-Harnstoff-Makromoleküls hydrophile Zentren als sogenannte innere Emulgatoren einzubauen. Als hydrophile Zentren kommen in diesem Zusammenhang anionische (z.B. $SO_3^{\ominus}$ oder $COO^{\ominus}-$) Gruppen und/oder mehrfach sich wiederholende $[-CH_2-CH_2-O-]$-Sequenzen in Betracht. Die hydrophilen Zentren können im Prinzip zu einem beliebigen Zeitpunkt während der Herstellung des Polyurethans in das Makromolekül eingebaut werden.

Im allgemeinen geht man dabei so vor, dass zunächst aus einer höhermolekularen Polyhydroxyl-Verbindung, ggf. einem niedermolekularen Mono-, Di- und/oder Triol, sowie einem Überschuss an Polyisocyanat ein Prepolymeres mit endständigen NCO-Gruppen hergestellt wird, welches dann unter Kettenverlängerung, beispielsweise analog zu den Verfahren der DE-AS 1 495 745 (US-Patent 3 479 310), der DE-OS 1 770 068 (US-Patent 3 756 992) oder der DE-OS 2 446 440 und DE-OS 2 811 148 in eine Polyurethan Dispersion übergeführt wird. Sowohl die höhermolekulare Polyhydroxylverbindung als auch der ggf. mitverwendete niedermolekulare Alkohol kann dabei ionische Gruppen oder in ionische Gruppen überführbare Gruppierungen enthalten, wie sie beispielsweise in DE-OS 1 770 068 und DE-OS 2 446 440 angeführt werden. Es ist aber auch möglich, neben bzw. anstelle der ionisch modifizierten hoch- und niedermolekularen Alkohole als hydrophile Segmente Mono- oder Diole mit Ethylenoxid-Sequenzen in das Makromolekül einzubauen, wie sie zum Beispiel in den deutschen Offenlegungsschriften 2 314 512 (US-Patent 3 905 929), 2 551 094, 2 555 534 und 2 651 506 beschrieben werden.

Die erfindungsgemäss zu verwendenden Polyesterdiole A) mit einem Molekulargewicht von 500-5000, die auch die Gruppe der Polycarbonate, also Polykohlensäureester umfassen, sind zum Beispiel Umsetzungsprodukte von zweiwertigen Alkoholen mit zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls zum Beispiel durch Halogenatome substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethyltetrahydrophthalsäureanhydrid, Glutarsäureanhydrid, Maleinsäure, Maleinsäureanhydrid, Fumarsäure, dimere und trimere Fettsäuren der Ölsäure, gegebenenfalls in Mischung mit monomeren Fettsäuren, Terephthalsäuredimethylester, Terephthalsäure-bis-glykolester. Als zweiwertige Alkohole kommen zum Beispiel Ethylenglykol, Proandiol-(1,2) und -(1,3), Butandiol-(1,4 und -(2,3), Hexandiol-(1,6), Octandiol-(1,8), Neopentylglykol, Cyclohexandimethanol, (1,4-Bis-hydroxymethylcyclohexan), 2-Methyl-1,3-propandiol, ferner Diethylenglykol, Triethylenglykol, Tetraethylenglykol, Polyethylenglykole, Dipropylenglykol, Polypropylenglykole, Dibutylenglykole und Polybutylenglykole in Frage. Auch Polyester aus Lactonen, zum Beispiel ε-Caprolacton oder Hydroxycarbonsäuren, zum Beispiel ε-Hydroxycapronsäure, sind einsetzbar.

Als Hydroxylgruppen aufweisende Polycarbonate kommen solche der an sich bekannten Art in Betracht, die zum Beispiel durch Umsetzung von Diolen wie Propandiol-(1,3), Butandiol-(1,4) und/oder Hexandiol-(1,6), Diethylenglykol, Triethylenglykol oder Tetraethylenglykol, mit Diarylcarbonaten, zum Beispiel Diphenylcarbonat oder Phosgen, hergestellt werden können.

Der Polyurethan-Festkörper enthält 35-55 Gew.-% Polyester und/oder Polycarbonat, (A), bevorzugt 40-50 Gew.-% (A). Bevorzugt ist der Molekulargewichtsbereich von 1000-3000.

Als niedermolekulare Diole B) können zum Beispiel Ethandiol, Propandiol-1,2 und -1,3, Butandiol-1,4 und -1,3, Pentandiole, Hexandiole oder Neopentylglykol verwendet werden. Der Polyurethan-Festkörper enthält 6-15 Gew.-% Diole und gegebenenfalls Triole, bevorzugt 6-12 Gew.-%, wobei der Triol-Anteil sich auf maximal 8% beläuft (B). Die zusätzliche Verwendung von trifunktionellen Hydroxylverbindungen wie Trimethylolpropan, Hexantriolen oder Glycerin ist zwar im Prinzip möglich, gehört aber zu den weniger bevorzugten Ausführungsformen des erfindungsgemässen Verfahrens. Die Erzielung hoher Urethangruppengehalte bedingt den Aufbau höhermolekularer Oligourethane, deren Viskosität hohe Werte erreichen kann. Bei Verwendung trifunktioneller Aufbaukomponenten besteht die Gefahr, dass teilweise unlösliche Anteile entstehen, die eine Weiterverarbeitung zu gebrauchsfähigen PUR-Dispersionen nahezu unmöglich macht. So sollte der Anteil der verzweigenden Komponenten in B) 8% nicht übersteigen.

Chemisch fixierte hydrophile Gruppen aufweisende, vorzugsweise im Sinne der Isocyanat-Additionsreaktionen mono- und insbesondere difunktionelle Aufbaukomponenten der beispielhaft in den obengenannten Literaturstellen bezüglich der Herstellung von wässerigen Polyurethandispersionen oder -lösungen beschriebenen Art, sind beispielsweise ionische bzw. potentielle ionische Gruppen aufweisende Diisocyanate, Diamine oder Dihydroxyverbindungen bzw. Polyethylenoxid-Einheiten aufweisende Diisocyanate oder Mono- oder Diole. Zu den bevorzugten hydrophil modifizierten Aufbaukomponenten gehören insbesondere die Sulfonatgruppen aufweisenden aliphatischen Diole gemäss DE-OS 2 446 440, Dimethylolpropionsäure die anionischen einbaufähigen inneren Emulgatoren gemäss DE-OS 2 651 506 und auch die dort beschriebenen, monofunktionellen einbaufähigen Polyether.

Bevorzugt zu nennen sind hier Dimethylolpropionsäure und deren Salze, z.B. Ammoniumsalze, Dimethylolpropionsäureamide und Mono-hydroxypolyalkylenoxide mit EOX/POX-Gehalten von 60:40 bis 90:10, besonders 85:15, im Molbereich von bevorzugt 1000-3000, besonders 1500-2500.

Der PUR-Festkörper enthält 1,5-15 Gew.-%, bevorzugt 2-7 Gew.-%, anionische Gruppen tragende und/oder nichtionische Polyoxyethylensegmente enthaltende ein- oder mehrwertige Verbindungen (C).

Der Polyurethan-Festkörper enthält 25-45 Gew.-%, bevorzugt 30-40 Gew.-%, eines dicyclischen Polyisocyanats mit aliphatisch gebundenen NCO-Gruppen (D) und 2-9 Gew.-%, bevorzugt 3-7 Gew.-%, aliphatischer und/oder monocyclischer, aliphatischer Polyisocyanate (E). Vertreter der cycloaliphatischen Polyisocyanate (D) sind zum Beispiel 4,4'-Diisocyanato-dicyclohexylmethan, 2,2-Bis[4-isocyanatocyclohexyl]-propan und 3,3'-Dimethyl- sowie andere Alkylsubstituierte 4,4'-Diisocyanatodicyclohexylmethane in beliebigen Stereoisomeren oder Stereoisomerengemischen. Als aliphatische Diisocyanate (E) kommen Butandiisocyanat-1,4, Hexandiisocyanat-1,6, 2,2,4-Trimehtylhexandiisocyanat, Undecandiisocyanat-1,11, Lysinesterdiisocyanat, Cyclohexandiisocyanat-1,3 und -1,4,

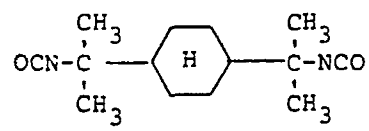

und 1-Isocyanato-, 3-isocyanatomethyl-3,5,5-trimethylcyclohexyl-diisocyanat in Betracht.

Der PUR-Festkörper enthält 0,2-4,0 Gew.-%, bevorzugt 0,8-3,5 Gew.-%, Polyamine mit einer Funktionalität > 2, bevorzugt 2,5-3,5 (F). Es kommen zum Beispiel aliphatische und/oder cycloaliphatische Triamine, Tetramine, wie z.B. Diethylentriamin, Triethylentetramin, Dipropylentriamin, Tripropylentetraamin, hydrierte Anlagerungsprodukte von Acrylnitril an aliphatische oder cycloaliphatische Diamine, vorzugsweise solche mit Anlagerung einer Acrylnitrilgruppe, z.B. Hexamethylen-propylen-triamin, Tetramethylen-propylen-triamin, Isophoron-propylen-triamin, 1,4- oder 1,3-Cyclohexan-propylentriamin oder deren Abmischungen mit Diaminen in Frage. Als Diamine zum Abmischen und Triamine und/oder Tetramine eignen sich z.B. Propandiamin-1,2 und -1,3, Ethylendiamin, Hexan-1,6-diamin, 2,2-Dimethylpropan-1,3-diamin, Isophorondiamin, 1,4- oder 1,3-Cyclohexandiamin, 4,4'-Diamino-dicyclohexylmethan, 4,4'-Diamino-3,3'-dimethyl-dicyclohexylmethan

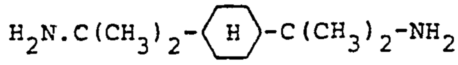

oder 3,3'-Dimethyl-4,4'-diisocyanato-dicyclohexyl.

Bei der Herstellung der NCO-Prepolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO-reaktiven Wasserstoffatomen, vorzugsweise aus Hydroxylgruppen, von 1,05 bis 10, vorzugsweise von 1,1 bis 3, entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Prepolymere erfolgt vorzugsweise in der Schmelze bei 30 bis 150° C, vorzugsweise bei 50 bis 120° C. Die Herstellung der Prepolymere kann selbstverständlich auch in Gegenwart von organischen Lösemitteln erfolgen. Geeignete Lösemittel, die zum Beispiel zur Viskositätserniedrigung besonders hochschmelzender Prepolymerer in Mengen bis zu 30 Gew.-%, bezogen auf Feststoff, eingesetzt werden können, sind zum Beispiel Aceton, Methylethylketon, Glykolmonomethyletheracetat, Essigsäureethylester, Dimethylformamid, N-Methylpyrrolidon, Cyclohexanon oder Tetrahydrofuran.

Werden als anionische Salzgruppen oder in anionische Salzgruppen überführbare Gruppen enthaltende Verbindungen Diole mit Carboxyl- oder Carboxylatgruppen eingesetzt, so ist dafür Sorge zu tragen, die Reaktionstemperatur so niedrig zu halten, dass insbesondere freie Carboxylgruppen nicht nennenswert mit den im Gemisch enthaltenen Isocyanatgruppen reagieren. In Salzgruppen überführte Carboxylgruppen sind weniger empfindlich gegen diese Nebenreaktion, doch sollte allgemein bei dieser Klasse von Verbindungen die Reaktionstemperatur 80° C möglichst nicht übersteigen.

Es ist nicht ratsam, die Umsetzung der Prepolymere mit den Polyaminen der Funktionalität $>2$ im Lösemittel durchzuführen, da hierbei in der Regel unlösliche Produkte entstehen. Statt dessen ist die Ausführungsform bevorzugt, nach der die – gelösten oder ungelösten – NCO-Prepolymere in Wasser unter Rühren oder mit Hilfe Zonen hoher Scherkraft erzeugender Vorrichtungen dispergiert werden und die Kettenverlängerung bzw. -verzweigung in heterogener Phase mit dem in die Prepolymerdispersion eingerührten Amin- bzw. Amingemisch bewirkt wird.

Aus der entstandenen Polyurethandispersion kann das Lösemittel, falls gewünscht, durch Destillation entfernt werden. Für diese Verfahrensweise werden zum Lösen des Prepolymeren zweckmässigerweise solche mit einem Siedepunkt unter 100° C eingesetzt, also beispielsweise Aceton oder Tetrahydrofuran. Sollen dagegen Lösemittel als Koaleszensmittel in der Dispersion verbleiben, so können vorteilhaft auch hochsiedende Lösemittel, z.B. Dimethylacetamid oder N-Methylpyrrolidon, verwendet werden, die eine einwandfreie Filmbildung begünstigen.

Die wässerigen Zubereitungen der PUR-Dispersionen enthalten für ihre Verarbeitung auf PVC-Flächengebilden alkoxylierte Dimethylpolysiloxane und wasserlösliche Polyethylenoxid-Derivate in Mengen von 0,2-15 Gew.-%, bevorzugt 1-7 Gew.-%, bezogen auf die PUR-Dispersion.

Alkoxylierte Dimethylpolysiloxane sind z.B. oxalkyliertes Polysiloxan (EOX/POX-Gehalt = 70:30, Mol-Summe der EOX/POX-Gruppen ca. 8-15); wasserlösliche Polyethylenoxid-Derivate sind mehrfach Ethylenoxid-Einheiten, gegebenenfalls Hydroxyl- und/oder Carboxylendgruppen enthaltende Mittel, beispielsweise oxethyliertes Nonylphenol (Oxethylierungsgrad ca. 10) und/oder acetylierte Polyethylenoxide, Molgewicht ca. 600-10000, 25-35%ig in Wasser.

Den erfindungsgemässen Beschichtungsmassen werden selbstverständlich gegebenenfalls auch die aus der Beschichtungstechnik an sich bekannten griffverbesserenden Mittel, Pigmente, Farbstoffe, Verlaufmittel, Verdicker und andere Hilfsmittel wie z.B. Stabilisatoren aller Art, zugemischt (in einer Menge bis 20 Gew.-% des Gesamtfeststoffs).

Besonders zu nennen sind hier Vernetzer wie Formaldehyd/Melamin- und Formaldehyd/Harnstoff-Harze; Polyisocyanatabspalter wie Biurete oder Trimerisate oder Polyol-modifizierte Polyisocyanate aus Isophorondiisocyanat oder Dicyclohexylmethandiisocyanate oder Hexandiisocyanat-1,6, die blockiert sind mit Butanonoxim, Malonsäurediethylester, Acetessigsäureethylester etc., ferner Polyaziridine, das sind Umsetzungsprodukte aus Polyisocyanaten und Ethylenimin oder Propylenimin oder Additionsprodukte dieser Aziridine an Acryl- oder Methacrylester von Polyalkoholen.

Die wässerigen Finish-Zubereitungen werden auf beschichtete Flächengebilde, insbesondere PVC-Flächengebilde durch Rakeln, Rastern, Drucken, Spritzen etc. aufgebracht. Die Auflagemengen liegen für Finishe im allgemeinen sehr niedrig, z.B. zwischen 2-20 g/m², bevorzugt 5-10 g/m². Die Trocknung der Finish-Auflagen erfolgt bei 70-170° C, insbesondere bei 90-130° C.

Die folgenden Beispiele dienen zur Erläuterung der Erfindung. Wenn nicht anders vermerkt, sind Mengenangaben als Gewichtsteile bzw. Gewichtsprozente zu verstehen.

*Beispiel 1:*

A) Herstellung der PUR-Dispersion

Ansatz:

| | | |
|---|---|---|
| (1) | 340 g | Mischpolyadipat mit Hexandiol-1,6/Neopentylglykol = 65:35-Molverhältnis der Diole (OHZ 56) |
| (2) | 63,0 g | Butandiol-1,4 |
| (3) | 17,4 g | Dimethylolpropionsäure |
| (4) | 13,1 g | Triethylamin |
| (5) | 424 g | N-Methylpyrrolidon |
| (6) | 230,6 g | 4,4'-Dicyclohexylmethandiisocyanat |

(7) 37,0 g Hexandiisocanat
(8) 831 g entsalztes Wasser
(9) 5,7 g Diethylentriamin
(8) 57 g entsalztes Wasser

Die Mischung (1)-(4) wird in N-Methylpyrrolidon (5) gelöst und bei 80° C mit den Gemischen der beiden Diisocyanate (6) und (7) umgesetzt. Nach Zugabe von entsalztem Wasser (8) wird mit dem Amin (9) in wässeriger Lösung umgesetzt.

Man erhält 2019 g PUR-Dispersionen mit einem Feststoffgehalt von 35%, sie enthält 21% N-Methylpyrrolidon.

B) Finish-Zubereitung

920 g PUR-Dispersion nach A)
4 g Entschäumer (Antispumin R DI, Fa. Stockhausen, Düsseldorf, D 4000)
10 g acetyliertes Polyethylenoxid vom Molgewicht ca. 10 000, 30%ig in Wasser
5 g oxalkyliertes Polysiloxan (EOX/POX-Gehalt = 70:30), 100%ig, wasserlöslich
55 g Polyacrylsäure, 25%ig in Wasser
6 g Ammoniak konz.

C) Finishierung

Mit einer 40-er Rasterwalze wird die Finishzubereitung nach B) zum Bedrucken PVCbeschichteter Artikel eingesetzt. Trocknung erfolgt in 2 Min. bei 120° C, Auflage (Trockengewicht) ca. 5 g/m². Die Finishzubereitung liefert einen gut kontrastierten Druck; die Haftung ist trocken wie auch nass hervorragend.

Zur Beeinflussung des Griffes können der Finishzubereitung nach B) 5% Mattierungsmittel OK 412 (Degussa)
zugesetzt werden.

D) Zubereitung für Filmdrucke

500 g PUR-Disperion nach A)
10 g Entschäumer (Antispumin DI, Fa. Stockhausen)
30 g Harnstoff
20 g Rheologie-Hilfsmittel (Emulgator B, Fa. Bayer)
10 g Rheologie-Hilfsmittel (ACRACONC® O, Fa. Bayer)
100 g Farbpaste (EUDERM®-bordo C, Fa. Bayer)
5 g oxalkyliertes Polysiloxan gemäss B)
325 g Wasser

Trocknung der Drucke erfolgt bei 130° C 5 Min. lang.

Die Haftung des Druckes auf PVC-Folien oder PVC-beschichteten Substraten ist im trockenen wie im nassen Zustand sehr gut.

Die Alkoholbeständigkeit (gegen 50%iges wässeriges Ethanol) ist gut.

50-malige Bürstwasch- und Reibechtheitsproben zeigen trocken und nass gutes Echtheitsniveau.

*Beispiel 2:*

A) Herstellung der PUR-Dispersion
Ansatz:

420 g Hexandiol-1,6-adipat (OHZ 134)
58,5 g Butandiol-1,4
4,5 g Trimethylolpropan
40,2 g Dimethylolpropionsäure
30,0 g Triethylamin
130 g N-Methylpyrrolidon
67,0 g Hexandiisocyanat
366,0 g 4,4'-Dicyclohexylmethan-diisocyanat
16,0 g Trimerisat aus Hexandiisocyanat, NCO-Gehalt ca. 10%, blockiert mit Butanonoxim
19,0 g Dipropylentriamin
1400 g entsalztes Wasser

Die Herstellung der PUR-Dispersion erfolgt wie in Beispiel 1 A) beschrieben.

Die 40%ige PUR-Dispersion enthält ca. 5% N-Methylpyrrolidon.

B) Finish-Zubereitung

885 g PUR-Dispersion wie oben beschrieben
27 g oxalkyliertes Polysiloxan (EOX/POX-Gehalt = 70:30, 100% ig, wasserlöslich)
88 g oxalkyliertes Nonylphenol, Oxalkylierungsgrad 10

C) Finishierung

Die Finishzubereitung wird auf einem PVCbeschichtetem Artikel als Schlusslack aufgerakelt, Trocknung erfolgt bei 80-130° C, die Auflage beträgt ca. 8 g/m². Der Schlusslack besitzt gute Trocken- und Nasshaftung und gute Abriebfestigkeit.

Die Alkoholbeständigkeit (gegen 50%iges wässeriges Ethanol) ist gut.

*Beispiel 3:*

A) Herstellung der PUR-Dispersion
Ansatz:

500 g Hexandiol-1,6-polycarbonat (OHZ 56)
148 g Hexandiol-1,6
16,7 g Dimethylolpropionsäure
12,6 g Triethylamin
600 g N-Methylpyrrolidon
470 g 4,4'-Dicyclohexylmethan-diisocyanat
44,4 g Isophorondiisocyanat
20,6 g Diethylentriamin
4,5 g Ethylendiamin
1850 g entsalztes Wasser

Die Herstellung der PUR-Dispersion erfolgt analog 1 A).

Die 30%ige Dispersion enthält ca. 16% N-Methylpyrrolidon.

B) Finish-Zubereitung

880 g PUR-Dispersion nach 3 A)
30 g oxalkyliertes Polysiloxan (EOX/POX-Gehalt = 70:30%ig, wasserlöslich)
50 g oxalkyliertes Nonylphenol, Oxalkylierungsgrad 10.

C) Finishierung

Die Finishzubereitung wird auf einem PVC-beschichteten Artikel mittels einer Spiralrakel aufgebracht; Trocknung bei 80-130° C, Auflage (Trockengewicht) ca. 5 g/m². Der Finish zeichnet sich durch sehr gute Trocken- und Nasshaftung aus. Die Abriebfestigkeit (Scrubb-Test) ist sehr gut.

Die Alkoholbeständigkeit (gegen 50%iges wässeriges Ethanol) ist gut.

*Beispiel 4:*

A) Herstellung der PUR-Dispersion

Ansatz:

| | |
|---|---|
| 500 g | Butandiol-1,4-polyadipat (OHZ 56) |
| 93,0 g | Ethylenglykol |
| 13,4 g | Dimethylolpropionsäure |
| 13,4 g | Triethylamin |
| 10,0 g | Monohydroxy-polyalkylenoxid, EOX/POX = 85:15) |
| 700 g | N-Methylpyrrolidon |
| 497 g | 4,4'-Dicyclohexylmethan-diisocyanat |
| 76,0 g | Hexandiisocyanat-1,6 |
| 26,2 g | Dipropylentriamin |
| 17,0 g | Isophorondiamin |
| 1630 g | entsalztes Wasser |

Die Herstellung der PUR-Dispersion erfolgt analog 1 A)

Die 35%ige Dispersion enthält ca. 20% N-Methylpyrrolidon.

B) Finish-Zubereitung

| | |
|---|---|
| 975 g | PUR-Dispersion nach A) |
| 5 g | Entschäumer (Respumit® 3300, Fa. Bayer) |
| 15 g | acetyliertes Polyethylenoxid vom Molgew. ca. 10 000, 30%ig in Wasser |
| 5 g | oxalkyliertes Polysiloxan, wie in Beispiel 1 B) |

C) Finishierung

Die Finishzubereitung wird wie in Beispiel 3 C) beschrieben auf einen mit PVC beschichteten Artikel und auch auf einen mit PUR beschichteten Artikel aufgebracht. Auf beiden Artikeln zeichnet sich der Finish durch hervorragende Trocken- und Nasshaftung aus.

Die Alkoholbeständigkeit (gegen 50%iges wässeriges Ethanol) ist gut.

*Vergleichsbeispiele*

Herstellung der PUR-Dispersionen

A 1)

| | |
|---|---|
| 554 g | Hexandiol-1,6-polyadipat (OH-Zahl 134) |
| 23,0 g | Trimethylolpropan |
| 53,0 g | Dimethylolpropionsäure |
| 33,0 g | Triethylamin |
| 200 g | 1,6-Hexandiisocyanat |
| 310 g | 4,4'-Dicyclohexylmethan-diisocyanat |
| 69,5 g | Acetonazin |
| 1860 g | entsalztes Wasser |

Durchführung: (gemäss DE-OS 2 811 148)

In das bei 120° C entwässerte Hexandiol-polyadipat mischt man das Trimethylolpropan, die Dimethylolpropionsäure und das Triethylamin und gibt bei 60° C die Diisocyanate zu. Man rührt bei 80° C, bis ein konstant bleibender NCO-Wert erreicht ist. Dann lässt man auf 50° C abkühlen und rührt in die mässig viskose NCO-Prepolymerschmelze das Acetonazin ein, wobei die Temperatur leicht abfällt und die Viskosität weiter abnimmt. Unter gutem Rühren lässt man jetzt das Wasser zulaufen und rührt 2 Stunden nach.

Die entstandene Dispersion hat einen Feststoffgehalt von 40% (Beispiel 1 in DE-OS 3 134 161).

A 2)

| | |
|---|---|
| 554 g | Hexandiol-1,6-adipat (OHZ 134) |
| 53,0 g | Dimethylolpropionsäure |
| 33,0 g | Triethylamin |
| 490 g | N-Methylpyrrolidon |
| 158 g | 1,6-Hexandiisocyanat |
| 310 g | 4,4'-Dicyclohexylmethan-diisocyanat |
| 69,5 g | Acetonazin |
| 1700 g | entsalztes Wasser |

Die Umsetzung der Komponenten bei der Herstellung der Dispersion erfolgt wie in A 1).

Die Dispersion ist 35%ig und enthält 14,5% N-Methylpyrrolidon.

A 3)

| | |
|---|---|
| 485 g | Hexandiol-1,6-polyadipat (OH-Zahl 134) |
| 20 g | Trimethylolpropan |
| 85 g | propoxyliertes Addukt aus 2-Butendiol-1,4 und $NaHSO_3$ (Mol-Gewicht 425) |
| 365 g | 4,4'-Dicyclohexylmethandiisocyanat |
| 67 g | 1,6-Hexandiisocyanat |
| 50 g | Acetonazin |
| 107 g | N-Methylpyrrolidon |
| 1500 g | entsalztes Wasser |

Durchführung: a. A 1); vgl. DE-OS 2 811 148.

Die so erhaltene Dispersion hat einen Feststoffgehalt von 40% (Beispiel 2 in DE-OS 3 134 161).

Aus den PUR-Dispersionen A 1), A 2), A 3) wurden für Vergleichszwecke gemäss Beispiel 1 B) Finish-Zubereitungen hergestellt. Gemäss 1 C) werden PVC-Beschichtungsartikel finishiert. Zur Beurteilung dient die Trocken- und Nasshaftung, ferner die Beständigkeit gegen 50%igen wässerigen Ethylalkohol.

| | Trockenhaftung | Nasshaftung | Beständigkeit gegen 50%igen wässerigen Ethylalkohol |
|---|---|---|---|
| Beispiel 1 C) | ++ | ++ | + |
| Beispiel 2 C) | ++ | ++ | + |
| Beispiel 3 C) | ++ | ++ | + |
| Beispiel 4 C) | ++ | ++ | + |
| Vergleich A 1/C) | + | – | – |
| Vergleich A 2/C) | + | – | – |
| Vergleich A 3/C) | + | – | – |

++ sehr gut    o befriedigend
\+ gut    – mangelhaft

## Patentansprüche

1. Wässerige Beschichtungs- und Finish-Mittel insbesondere für PVC und PUR-Flächengebilde auf der Basis von Polyurethanionomer-Dispersionen mit einem Festkörpergehalt von 10 bis 70%, dadurch gekennzeichnet, dass der Polyurethan-Festkörper aus

A. 35-55 Gew.-% eines Polyesterdiols mit einem Molekulargewicht von 500-5000,

B. 6-15 Gew.-% niedermolekularen Diolen und gegebenenfalls Triolen mit 2-10 Kohlenstoff-Atomen, wobei der Triolanteil 8 Gew.-% beträgt,

C. 1,5-15 Gew.-% anionische Gruppen tragenden und/oder nicht ionische Polyoxyethylensegmente aufweisenden, ein- oder mehrwertigen Verbindungen,

D. 25-45 Gew.-% eines Diisocyanats der allgemeinen Formel

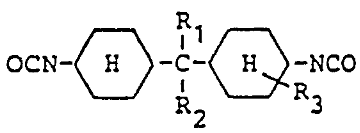

in der Regel $R_1$, $R_2$ und $R_3$ gleich oder verschieden sind und Wasserstoff oder einen gradkettigen oder verzweigten aliphatischen Kohlenwasserstoffrest mit 1-4 C-Atomen bedeutet,

E. 2-9 Gew.-% eines aliphatischen oder anderen cycloaliphatischen Diisocyanats und

F. 0,2-4,0 Gew.-% eines Polyamins mit einer Funktionalität > 2, bevorzugt 2,5-3,5, besteht und die wässerigen Zubereitungen alkoxylierte Dimethylpolysiloxane und wasserlösliche Polyethylenoxid-Derivate enthalten.

2. Wässerige Beschichtungs- und Finish-Mittel für vorzugsweise PVC-Flächengebilde gemäss Anspruch 1), dadurch gekennzeichnet, dass die wässerige Zubereitung 15-65% Feststoff enthält, der aus den folgenden Komponenten besteht:

I) 65-99,8 Gew.-% Polyurethanharnstoff nach 1) A-F),

II) 0,1-5 Gew.-% alkoxyliertes Dimethylpolysiloxan,

III) 0,1-10 Gew.-% wasserlösliche, mehrfach Ethylenoxid-Einheiten, ggf. Hydroxyl- und/oder Carboxylgruppen enthaltende Mittel,

wobei I + II + III $\geqq$ 80% beträgt.

3. Wässerige Beschichtungs- und Finish-Mittel gemäss Anspruch 2), dadurch gekennzeichnet, dass die wässerige Zubereitung 20-45% Feststoff enthält, der aus den Komponenten I, II, III in folgenden Verhältnissen zusammengesetzt ist:

I) 73-99 Gew.-% Polyurethanharnstoff

II) 0,5-2 Gew.-% alkoxyliertes Dimethylpolysiloxan

III) 0,5-5 Gew.-% wasserlösliche, mehrfach Ethylenoxid-Einheiten, ggf. Hydroxyl und/oder Carboxylgruppen enthaltende Mittel,

wobei die Summe I + II + III $\geqq$ 80% beträgt.

4. Wässerige Beschichtungs- und Finish-Mittel gemäss Anspruch 1-3), dadurch gekennzeichnet, dass das alkoxylierte Dimethylpolysiloxan nach II) ethoxyliert und/oder propoxyliert ist.

5. Wässerige Beschichtungs- und Finish-Mittel gemäss Anspruch 1, 4), dadurch gekennzeichnet, dass die nicht-ionischen, wasserlöslich Mittel nach III) alkoxylierte Alkylphenole sind.

6. Wässerige Beschichtungs- und Finish-Mittel gemäss Anspruch 1-5), dadurch gekennzeichnet, dass die nicht-ionischen Mittel nach III) hochmolekulare Polyethylenoxide oder Polyethylenoxid-Derivate sind.

7. Verfahren zum Aufbringen von Schlussstrichen und Finishen insbesondere auf PVC- und PUR-Flächengebilden nach bekannten Techniken, dadurch gekennzeichnet, dass hierfür wässerige Beschichtungs- und Finish-Mittel gemäss Ansprüchen 1-6) verwendet werden und die Trocknung bei 70-170° C, bevorzugt bei 90-130° C erfolgt.

## Claims

1. Aqueous coating and finishing agents, in particular for PVC and polyurethane sheet products, based on polyurethane ionomer dispersions with a solids content of 10 to 70%, characterised in that the polyurethane solid material consists of

A. 35-55% by weigt of a polyester diol with a molecular weight of 500-5,000,

B. 6-15% by weight of low molecular weight diols and optionally triols with 2-10 carbons atoms, the quantity of triols being 8% by weight,

C. 1.5-15% by weight of mono- or polyvalent compounds carrying anionic groups and/or containing non-ionic polyoxyethylene segments,

D. 25-45% by weight of a diisocyanate of the general formula

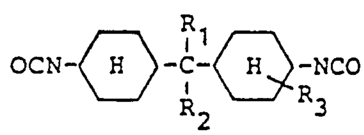

$R_1$, $R_2$ and $R_3$ and generally identical or different and denote hydrogen or a straight-chain or branched aliphatic hydrocarbon radical with 1-4 C atoms,

E. 2-9% by weight of an aliphatic or other cycloaliphatic diisocyanate and

F. 0.2-4% by weight of a polyamine with a functionality of > 2, preferably 2.5-3.5, and the aqueous preparations contain alkoxylated dimethyl polysiloxanes and water-soluble polyethylene oxide derivatives.

2. Aqueous coating and finishing agents for, preferably, PVC sheet products according to Claim 1, characterised in that the aqueous preparation contains 15-65% of solid material consisting of the following components:

I) 65-99.8% by weight of polyurethane urea according to 1) A-F),

II) 0.1-5% by weight of alkoxylated dimethyl polysiloxane,

III) 0.1-10% by weight of water-soluble agents containing more than one ethylene oxide unit, and

optionally hydroxyl and/or carboxyl groups,
I + II + III being ≧80%.

3. Aqueous coating and finishing agents according to Claim 2, characterised in that the aqueous preparation contains 20-45% of solid material which is composed of components I, II and III in the following ratios:

I) 73-99% by weight of polyurethane urea,

II) 0.5-2% by weight of alkoxylated dimethyl polysiloxane,

III) 0.5-5% by weight of water-soluble agents containing more than one ethylene oxide unit, and optionally hydroxyl and/or carboxyl groups,
the sum of I + II + III being ≧80%.

4. Aqueous coating and finishing agents according to Claim 1-3, characterised in that the alkoxylated dimethyl polysiloxane according to II) is ethoxylated and/or propoxylated.

5. Aqueous coating and finishing agents according to Claim 1, 4, characterised in that the non-ionic, watersoluble agents according to III) are alkoxylated alkylphenols.

6. Aqueous coating and finishing agents according to Claim 1-5, characterised in that the non-ionic agents according to III) are high molecular weight polyethylene oxides or polyethylene oxide derivatives.

7. Process for applying top coats and finishes, in particular to PVC and polyurethane sheet products, by known techniques, characterised in that aqueous coating and finishing agents according to Claims 1-6 are used for this purpose and the drying is carried out at 70-170° C, preferably at 90-130° C.

## Revendications

1. Produits de revêtement et de finissage aqueux, en particulier pour les produits plats en PVC et en polyuréthannes, à base de dispersions d'ionomères de polyuréthannes à une teneur en matière solide de 10 à 70%, caractérisés en ce que la matière solide de polyuréthanne consiste en

A. 35 à 55% en poids d'un polyester-diol de poids moléculaire 500 à 5000,

B. 6 à 15% en poids de diols et éventuellement de triols à bas poids moléculaire contenant 2 à 10 atomes de carbone, la proportion de triols étant de 8% en poids,

C. 1,5 à 15% en poids de composés mono- ou polyvalents portant des groupes anioniques et/ou contenant des segments non ioniques de polyoxyéthylène,

D. 25 à 45% en poids d'un diisocyanate de formule générale

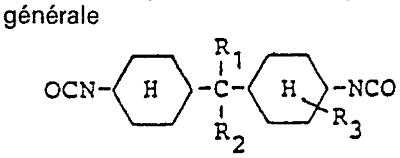

dans laquelle $R^1$, $R^2$ et $R^3$, ayant des significations identiques ou différentes, représentent chacun l'hydrogène ou un groupe hydrocarboné aliphatique à chaîne droite ou ramifiée en $C_1$-$C_4$,

E. 2 à 9% en poids d'un diisocyanate aliphatique ou d'un autre diisocyanate cycloaliphatique, et

F. 0,2 à 4,0% en poids d'une polyamine de fonctionnalité supérieure à 2, de préférence de 2,5 à 3,5, et en ce que les compositions aqueuses contiennent des diméthylpolysiloxanes alcoxylés et des dérivés solubles dans l'eau d'oxydes de polyéthylène.

2. Produits de revêtement et de finissage aqueux, de préférence pour des produits plats en PVC, selon la revendication 1, caractérisés en ce que la composition aqueuse contient 15 à 65% de matière solide consistant en les composants suivants:

I) 65 à 99,8% en poids de la polyuréthanne-urée selon 1) A à F),

II) 0,1 à 5% en poids de diméthylpolysiloxane alcoxylé,

III) 0,1 à 10% en poids de produits solubles dans l'eau, contenant des motifs répétés d'oxyde d'éthylène et éventuellement des groupes hydroxy et/ou carboxyle,
la somme I + II + III étant supérieure ou égale à 80%.

3. Produits de revêtement et de finissage aqueux selon la revendication 2, caractérisés en ce que la composition aqueuse contient 20 à 45% de matière solide consistant en les composants I), II), III) aux propositions suivantes:

I) 73 à 99% en poids de polyuréthanne-urée,

II) 0,5 à 2% en poids de diméthylpolysiloxane-alcoxylé,

III) 0,5 à 5% en poids de produits solubles dans l'eau contenant des motifs répétés d'oxyde d'éthylène et, le cas échéant, des groupes hydroxy et/ou carboxyle,
la somme I + II + III étant supérieure ou égale à 80%.

4. Produits de revêtement et de finissage aqueux selon les revendications 1 à 3, caractérisés en ce que le diméthylpolysiloxane alcoxylé II) est éthoxylé et/ou propoxylé.

5. Produits de revêtement et de finissage aqueux selon les revendications 1 à 4, caractérisés en ce que les produits non ioniques solubles dans l'eau III) sont des alkylphénols alcoxylés.

6. Produits de revêtement et de finissage aqueux selon les revendications 1 à 5, caractérisés en ce que les produits non ioniques III) sont des oxydes de polyéthylène ou des dérivés d'oxydes de polyéthylène à haut poids moléculaire.

7. Procédé pour appliquer des enduits d'obturations et des apprêts de finissage, en particulier sur des produits plats en PVC et en polyuréthannes, selon des techniques connues, caractérisé en ce que l'on utilise à cet effet des produits de revêtement et de finissage aqueux selon les revendications 1 à 6 et en ce que l'on sèche à des températures de 70 à 170° C, de préférence de 90 à 130° C.